# DEMANDE DE BREVET EUROPEEN

(11) **EP 1 950 667 A1**
(43) Date de publication de la demande: **30.07.2008**
(21) Numéro de dépôt: 08150344.3
(22) Date de dépôt: 17.01.2008
(51) Int. Cl.: G06F 13/40

(54) **Passerelle de communication entre deux entités**

(30) Priorité: 29.01.2007 FR 0752939
(71) Demandeur: HISPANO-SUIZA, 92700 Colombes (FR)
(72) Inventeur: Mechadier, Fabrice, 75007 Paris (FR)
(74) Mandataire: Joly, Jean-Jacques

(57) **Abrégé**

Passerelle de communication comportant :
- une première entité (3) comprenant au moins un élément d'interconnexion à commutation de paquet (7) communiquant par paquets de données,
- une seconde entité (5) comprenant un ensemble de ports (9) communiquant selon un ensemble de données élémentaires, et
- des moyens de conversion (11) reliant ladite première entité (3) avec ladite seconde entité (5) pour faire une conversion entre lesdits paquets de données et ledit ensemble de données élémentaires afin de permettre une communication entre lesdites première et seconde entités.

## Description

### Domaine technique de l'invention

L'invention se rapporte au domaine de la communication entre deux entités, et plus particulièrement entre une entité simple et une autre plus complexe dans une architecture de calculateur aéronautique.

### Arrière-plan de l'invention

Actuellement, on connaît des dispositifs de connexion entre deux types d'entités qui ne partagent pas forcement la même topologie. En effet, dans le domaine des architectures de systèmes informatiques, il existe des dispositifs qui permettent de passer d'un type de bus à un autre type de bus pour réaliser par exemple un échange d'informations entre un bus à haut débit et un autre type de bus à haut débit.

Par ailleurs, pour passer d'un système d'interconnexion à commutation de paquet du type Serial RapidIO™ à un ou plusieurs bus du type port série synchronisé SPI (Serial Peripheral Interface), il est nécessaire actuellement d'utiliser un microprocesseur généraliste comme passerelle entre les deux types de bus. Ce genre de passerelle ou d'architecture est très coûteux, encombrant, et très gourmand en consommation d'énergie et en temps de calcul.

### Objet et résumé de l'invention

L'invention a pour but de remédier à ces inconvénients, et d'optimiser le coût, la compacité, la consommation d'énergie et la rapidité d'échange d'informations.

Ces buts sont atteints grâce à une passerelle de communication comportant :
- une première entité comprenant au moins un élément d'interconnexion à commutation de paquet communiquant par paquets de données,
- une seconde entité comprenant un ensemble de ports communiquant selon un ensemble de données élémentaires comportant des données discrètes, sérialisées, ou parallélisées, et
- des moyens de conversion reliant ladite première entité avec ladite seconde entité pour faire une conversion entre lesdits paquets de données et ledit ensemble de données élémentaires afin de permettre une communication entre lesdites première et seconde entités, lesdits moyens de conversion comportant :
- des moyens de stockage pour stocker temporairement lesdits paquets de données en provenance de ladite première entité, et
- des moyens de contrôle destinés à décoder lesdits paquets de données stockés temporairement pour récupérer des parties de données élémentaires dédiées à des ports parmi ledit ensemble de ports avant d'envoyer chacune desdites parties de données élémentaires à son port de destination.

Ainsi, ce système permet un échange d'information de manière simple, rapide et peu coûteux entre une entité simple et une autre plus complexe pouvant comporter un protocole. Ce système permet également la transmission des données de manière optimale depuis une entité complexe pouvant comporter un protocole vers une entité simple. Alors, la passerelle permet par exemple, de réaliser un échange d'informations formatées entre un bus haut débit et un ou plusieurs bus bas débit en assurant l'indépendance entre les vitesses des différents bus. Il permet également de contrôler la présence ou l'état des abonnés au bus bas débit et de contrôler les signaux d'entrées sorties.

Selon une particularité de la présente invention, lesdits moyens de stockage sont destinés à stocker temporairement ledit ensemble de données élémentaires en provenance de ladite seconde entité, et en ce que lesdits moyens de contrôle sont destinés à transformer ledit ensemble de données élémentaires stocké temporairement en des paquets de données alimentant ladite première entité.

Ainsi, on peut transmettre des données depuis une entité simple qui ne peut émettre que des données simples vers une entité complexe.

Avantageusement, lesdits moyens de contrôle sont destinés à gérer l'information décodée par la première entité d'un paquet de données spécifique pour générer un top de synchronisation.

Ainsi, un top de synchronisation à décodage matériel peut être facilement intégré dans les moyens de conversion en décodant par exemple une trame prioritaire de type multidiffusion.

Selon un premier mode de réalisation, la passerelle est réalisée dans un composant programmable. Ce premier mode de réalisation est très souple et peut s'adapter facilement à différents types d'entités pour un échange rapide d'informations entre ces entités. En effet, la programmation ou le codage des moyens de conversion peut être facilement modifié pour s'adapter aux différents composants du système.

Selon un deuxième mode de réalisation, la passerelle est réalisée dans un circuit intégré à application spécifique. Ceci permet d'utiliser un circuit intégré à très haute vitesse de manière optimale et compacte pour un échange rapide d'informations entre les entités.

Selon une particularité de la présente invention, ledit ensemble de ports peut comporter des entrées-sorties discrètes de sorte que ledit ensemble de données élémentaires comportent des données discrètes.

Selon une autre particularité de la présente invention, ledit ensemble de ports peut comporter au moins un port série de sorte que ledit ensemble de données élémentaires comportent des données sérialisées. Ledit au moins un port série peut être de type port série synchronisé SPI. Ceci permet de réaliser une interface efficace avec des composants extérieurs en mode maître esclave.

Selon encore une autre particularité de la présente invention, ledit élément d'interconnexion à commutation de paquet est de type Serial RapidIO™. Ainsi, la passerelle peut faire une interface rapide entre l'élément Serial RapidIO™ et des ports du type SPI.

L'invention vise également un calculateur aéronautique comprenant au moins une unité centrale et des moyens d'acquisition et comportant au moins une passerelle selon l'une quelconque des caractéristiques ci-dessus, ladite passerelle étant une interface entre ladite au moins unité centrale et lesdits moyens d'acquisition.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 est une vue schématique d'une passerelle de communication entre deux entités selon l'invention;
- les figures 2 et 3 sont des vues schématiques de la passerelle selon la figure 1 comportant des moyens de stockage et des moyens de contrôle ;
- les figures 4 et 5 sont des vues schématiques de deux modes de réalisations selon la figure 1 ;
- la figure 6 est une vue schématique d'un exemple particulier selon la figure 1 ; et
- la figure 7 est une vue schématique d'un calculateur aéronautique utilisant la passerelle de la figure 1.

### Description détaillée de modes de réalisation

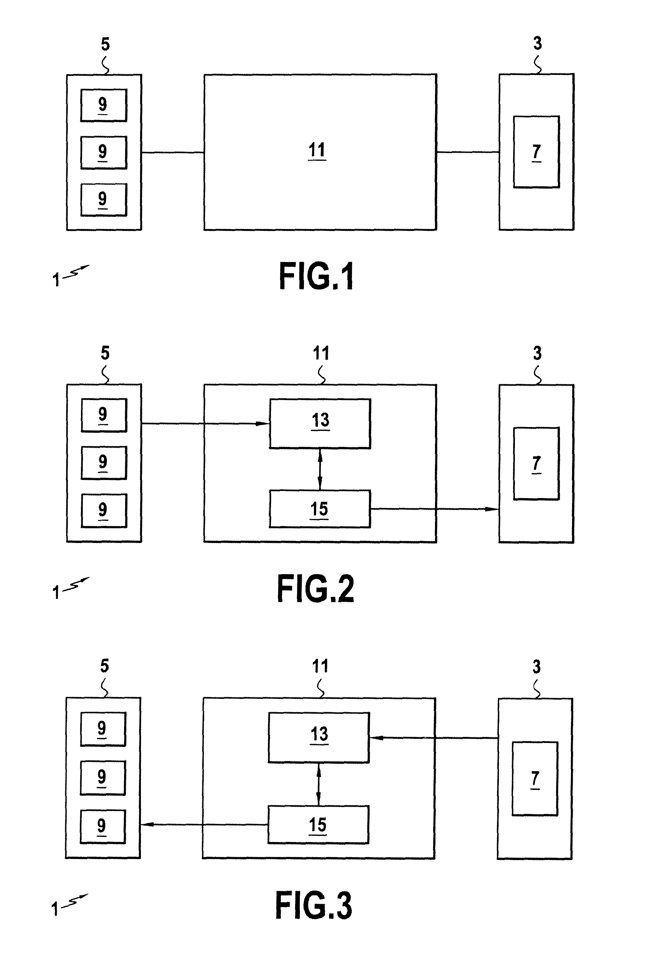

La figure 1 illustre de manière schématique une passerelle 1 de communication entre deux entités 3 et 5 selon l'invention.

La première entité 3 comprend au moins un élément d'interconnexion à commutation de paquet 7 communiquant par paquets de données. A titre d'exemple l'élément d'interconnexion à commutation de paquet est de type Serial RapidIO™ qui assure les couches logique, transport et physique du standard RapidIO™.

La seconde entité 5 comprend un ensemble de ports 9, qui peut bien entendu comprendre un seul port, communiquant selon un ensemble de données élémentaires ou de base. Par données élémentaires, on signifie des données simples ou standard qui peuvent être des données discrètes ou sérialisées.

En effet, l'ensemble de ports 9 peut comporter des entrées-sorties discrètes communiquant selon des données discrètes ou de ports séries communiquant selon des données sérialisées ou éventuellement de ports parallèles. Ainsi, l'ensemble de données élémentaires peut comporter des données discrètes, sérialisées, ou éventuellement parallélisées.

A titre d'exemple, l'ensemble de ports 9 peut comporter un ou plusieurs ports d'interface générale GPIO (General Purpose IO) et un ou plusieurs ports séries synchronisés SPI (Serial Peripheral Interface).

La passerelle comporte en outre des moyens de conversion 11 reliant la première entité 3 avec la seconde entité 5 pour faire une conversion entre les paquets de données et l'ensemble de données élémentaires afin de permettre la communication entre les première et seconde entités 3 et 5.

Les figures 2 et 3 montrent que la passerelle 1 de communication peut comporter des moyens de stockage 13 et des moyens de contrôle 15.

La figure 2 illustre la transmission de données depuis la seconde entité 5 vers la première entité 3.

En effet, les moyens de stockage 13 permettent de stocker temporairement l'ensemble de données élémentaires en provenance de la seconde entité 5. Par ailleurs, les moyens de contrôle 15 récupèrent ces données élémentaires stockées temporairement pour les transformer en des paquets de données afin d'alimenter la première entité 3.

La figure 3 illustre la transmission de données depuis la première entité 3 vers la seconde entité 5.

En effet, les moyens de stockage 13 permettent de stocker temporairement les paquets de données en provenance de la première entité 3. Par ailleurs, les moyens de contrôle 15 permettent de décoder les paquets de données stockés temporairement pour récupérer des parties de données élémentaires dédiées à des ports parmi l'ensemble de ports 9 avant d'envoyer chacune de ces parties de données élémentaires à son port 9 de destination.

Ainsi, on peut par exemple réaliser un échange d'informations formatées entre un bus haut débit et un ou plusieurs bus bas débit en assurant l'indépendance entre les vitesses des différents bus. En plus de l'échange d'informations ou de données, il existe des signaux de transmission de données et des signaux de contrôle (par exemple, signal horloge). Alors, on peut contrôler la présence ou l'état des abonnés au bus bas débit ainsi que les signaux d'entrées sorties. Par exemple, les échanges de données entre abonnées peuvent se faire de manière cyclique, de sorte que si la passerelle ne reçoit pas de réponse, elle conclue que l'abonné est absent.

Avantageusement, les moyens de contrôle 15 peuvent aussi gérer l'information décodée par la première entité 3 d'un paquet de données spécifique pour générer un top de synchronisation. Par exemple, les moyens de conversion 11 peuvent être informés de l'arrivée d'une trame courte ultra prioritaire du type « événement à diffusion multiple » (Multicast event) pour transmettre des signaux d'horloge ou un top de synchronisation au niveau d'une sortie de ces moyens de conversion 11. On notera que le décodage de la trame courte ultra prioritaire est réalisé par l'élément d'interconnexion à commutation de paquet 7 de l'entité 3. Ceci permet d'activer un signal discret et d'informer les moyens de conversion 11 pour générer le top de synchronisation.

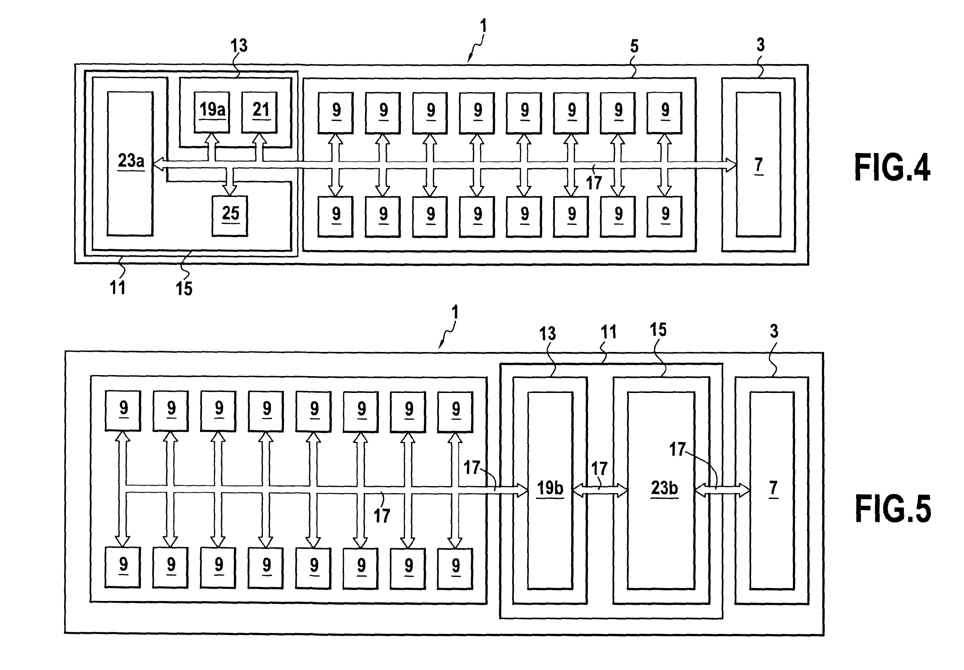

Les figures 4 et 5 illustrent des exemples de réalisation de la passerelle 1 selon un composant programmable de type « réseau prédiffusé programmable par l'utilisateur» FPGA (Field Programmable Gate Array) ou selon un composant de type « circuit intégré à application spécifique » ASIC (Application Specific Integrated Circuit).

En effet, la figure 4 est un mode de réalisation simple et peu coûteux de la passerelle 1 dans un composant FPGA selon une architecture programmable entièrement IP (Full IP).

Selon ce mode de réalisation, la première entité 3 comprend un élément d'interconnexion à commutation de paquet 7 de type Serial RapidIO™. La seconde entité 5 comporte un ensemble de ports 9 comprenant des ports SPI.

Les moyens de conversion 11 comportant les moyens de stockage 13 et de contrôle 15 relient la première entité 3 avec la seconde entité 5 par l'intermédiaire d'un bus d'interconnexion 17 permettant le dialogue entre les différentes parties de la passerelle 1 de communication.

Selon cet exemple, les moyens de stockage 13 comprennent une mémoire tampon 19a à double accès (par exemple, une mémoire vive RAM) et une mémoire à accès directe 21 (DMA). Les moyens de contrôle 15 comprennent une unité de contrôle 23a (par exemple un contrôleur 32-Bit) relié à une mémoire de code 25 stockant le code de programmation et les paramètres de routage de l'unité de contrôle 23a ou plus généralement de la passerelle 1. On notera que les paramètres de routage de cette mémoire de code 25 peuvent être éventuellement initialisés au démarrage de la passerelle.

Le codage ou la description du comportement et de l'architecture de la passerelle 1 de communication peut être réalisé par un langage de description matériel de type VHDL (Very High speed ou VHSIC Hardware Description Language) ou par l'utilisation d'outil de génération automatique de système configurable. Ce codage peut être facilement modifié pour s'adapter à tout changement concernant les différents éléments de la passerelle 1. Par exemple, on peut changer le nombre de ports 9 en modifiant simplement la programmation de la passerelle 1. Ainsi, la passerelle 1 selon cet exemple est très souple à utiliser et présente une réalisation simple et peu coûteuse.

Pour les paquets de données en réception de la première entité 3, les moyens de stockage 13, plus particulièrement la mémoire tampon 19a récupèrent et stockent temporairement ces paquets de données. Ensuite, l'unité de contrôle 23a décode ces paquets de données pour retrouver les portions de données élémentaires dédiées à chacun des ports 9 et affectent chaque portion de données élémentaires à son port 9 correspondant.

En revanche, pour les paquets de données en émission vers la première entité 3, les moyens de stockage 13 récupèrent et stockent temporairement dans la mémoire tampon 19a les données élémentaires en provenance des différents ports 9. Ensuite, l'unité de contrôle 23a transforme ces données élémentaires en paquets de données avant de les envoyer à la première entité 3.

La figure 5 est un deuxième mode de réalisation de la passerelle 1 selon un composant ASIC qui est plus compacte et qui se prête mieux à une production en masse.

Également selon cet exemple, la première entité 3 comprend un élément d'interconnexion à commutation de paquet 7 de type Serial RapidIO™ et la seconde entité comporte un ensemble de ports 9 comprenant des ports SPI.

De même, les moyens de conversion 11 comportant les moyens de stockage 13 et de contrôle 15 relient la première entité 3 avec la seconde entité 5 par l'intermédiaire des bus d'interconnexion 17 permettant le dialogue entre les différentes parties de la passerelle 1.

Selon cet exemple, les moyens de stockage 13 comprennent aussi des mémoires tampons 19b à double accès et les moyens de contrôle 15 comprennent une unité de contrôle 23b (par exemple un séquenceur) interposée entre les moyens de stockage 13 et la première entité 3. Par ailleurs, les moyens de stockage 13 sont interposés entre l'ensemble de ports 9 et les moyens de contrôle 15.

Ainsi, pour les paquets de données en réception de la première entité 3, les moyens de contrôle 15 récupèrent ces paquets de données et les décomposent selon leurs ports de destination avant de les ranger temporairement dans les moyens de stockage 13. En suite, chaque port 9 récupère les données élémentaires qui lui sont destinées.

En revanche, pour les paquets de données en émission vers la première entité 3, chaque port 9 range ses données élémentaires dans les mémoires tampons 19b. Ensuite, les moyens de contrôle 15 récupèrent les données élémentaires depuis les mémoires tampons 19b pour générer une trame ou des paquets de données à destination de la première entité 3.

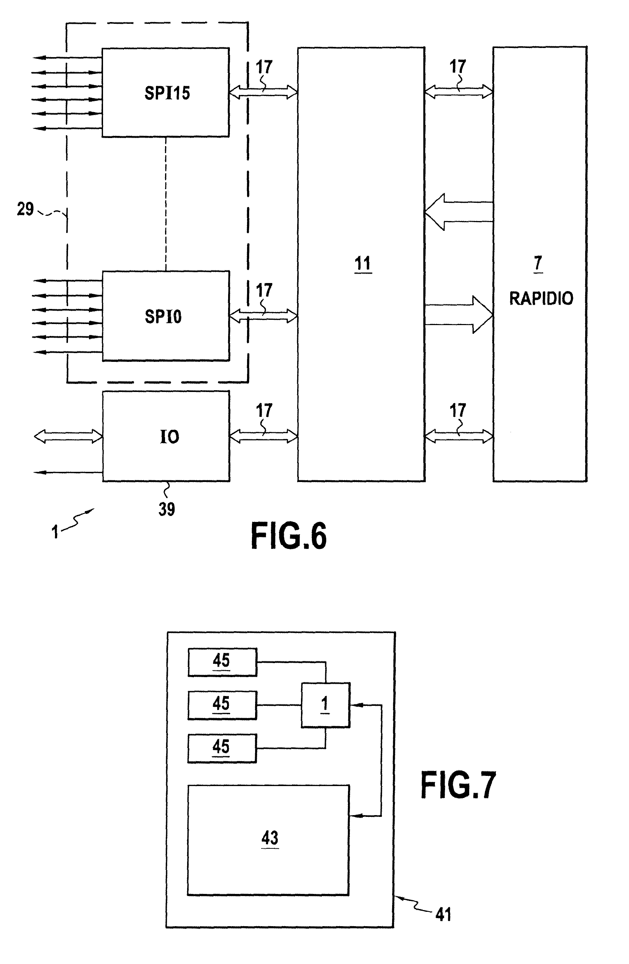

La figure 6 est un exemple d'un mode de réalisation d'une passerelle 1 de communication comportant un bloc RapidIO™ 7, un bloc de conversion (moyens de conversion 11, selon les figures précédentes), un bloc SPI 29 comprenant seize ports SPI de SPI0 à SPI15 , et un bloc d'entrée sortie IO 39 du type GPIO. Le bloc de conversion 11 échange des données, des signaux de transmission et des signaux de contrôle par l'intermédiaires des bus d'interconnexion 17 entre d'une part le bloc RapidIO™ 7 et d'autre part les blocs SPI 29 et IO 39.

Le bloc RapidIO™ 7 comporte une couche logique, une couche de transport et une couche physique.

La couche logique comporte les fonctions suivantes : lire et écrire, transactions de maintenance, messages, sonnettes « Doorbells », reconnaissance logique, et mémoire à accès directe (DMA).

La couche de transport comporte les fonctions suivantes : distributions de paquets de données comprenant source et destination, jusqu'à 64000 dispositif ID, pair à pair (peer to peer) éliminant la nécessité de passer par l'intermédiaire d'un hôte (host) commun, et possibilité de multidiffusion (multicast).

La couche physique comporte entre autre : une horloge, un dispositif de synchronisation, une topologie paire à paire ainsi que d'autres caractéristiques standard du RapidIO™.

Le bloc SPI 29 permet de réaliser une interface avec des composants extérieurs en mode maître ou esclave. Une principale fonction d'un port SPI peut être la sérialisation/désérialisation des données et la génération des signaux de sélection.

Le bloc d'interface générale GPIO 39 permet de gérer des fonctions spécifiques d'entrées sorties, par exemple la définition de l'entrée ou la sortie de chaque pin IO et la valeur par défaut des sorties lorsque l'interface RapidIO™ n'est plus activé après un écoulement d'un temps déterminé (time out), il génère aussi les sorties d'initialisations « RESET » logiciel ou matériel nécessaire à chaque port SPI, il réalise la fonction de « gardien vigilant » (watchdog) associé à chaque port SPI pour surveiller le bon fonctionnement des abonnés reliés à chacun des ports 29. Il centralise dans un mot de statut, accessible par le bloc RapidIO™ 7, l'état des ports 29 comme la présence d'un abonné, le contrôle de débordement des mémoires tampons (buffers) en émission et en réception, et la détection d'erreur d'un événement singulier SEU (Single Event Upset). Il génère également un signal électrique de synchronisation activé par une trame multidiffusion (multicast) dédiée. Ce signal peut être utilisé par les abonnés et il permet une mesure de gigue, du lien série haut débit, pour vérifier la qualité des interconnections.

Le bloc de conversion 11 permet la récupération des informations désérialisées par les ports SPI et permet de créer une zone tampon (buffer) de données qui alimente le bloc RapidIO™ 7. Simultanément, il permet la récupération des informations désérialisées par le bloc RapidIO™ 7 et permet de décoder et de mettre à disposition les données élémentaires dédiées à chaque port SPI 29. Ainsi, le bloc de conversion 11 garantie l'intégrité des données et assure l'indépendance entre la vitesse du bloc SPI 29 et le bloc RapidIO™ 7.

Ainsi, la passerelle 1 permet un échange d'informations formatées entre un bus haut débit RapidIO™ et seize ports SPI avec un traitement simultané des seize ports.

Plus particulièrement, la passerelle 1 permet une vérification de l'état et de la présence des abonnées au port SPI. Elle permet également la gestion de signaux d'entrées sorties logiques de type « contre transaction TOR » (Time Out Reversal), la génération d'un signal d'initialisation RESET dédié à chaque port, l'acquisition ou la restitution de signaux logiques, la mise des sorties TOR dans un état logique par défaut après l'écoulement d'un temps déterminé « time out ». La passerelle 1 permet aussi la génération d'un signal de sortie électrique sur le décodage d'une trame courte du type multidiffusion (Mulicast Avant), la protection SEU sur des registres et des mémoires internes avec report dans un registre d'état, le report d'une détection SEU dans un registre d'état, et l'émission d'une trame courte de type Doorbeil sur une anomalie.

La passerelle 1 de communication peut être utilisée dans une architecture de calculateur aéronautique. En effet, la figure 7 illustre de manière schématique un exemple d'un calculateur aéronautique 41 comprenant au moins une unité centrale 43, des moyens d'acquisition 45 et au moins une passerelle 1 (selon les figures précédentes) réalisant l'interface entre l'unité centrale 43 et les moyens d'acquisition 45.

## Revendications

1. Passerelle de communication, **caractérisée en ce qu'**elle comporte :
- une première entité (3) comprenant au moins un élément d'interconnexion à commutation de paquet (7) communiquant par paquets de données,
- une seconde entité (5) comprenant un ensemble de ports (9) communiquant selon un ensemble de données élémentaires comportant des données discrètes, sérialisées, ou parallélisées, et
- des moyens de conversion (11) reliant ladite première entité (3) avec ladite seconde entité (5) pour faire une conversion entre lesdits paquets de données et ledit ensemble de données élémentaires afin de permettre une communication entre lesdites première et seconde entités, lesdits moyens de conversion (11) comportant :
- des moyens de stockage (13) pour stocker temporairement lesdits paquets de données en provenance de ladite première entité (3), et
- des moyens de contrôle (15) destinés à décoder lesdits paquets de données stockés temporairement pour récupérer des parties de données élémentaires dédiées à des ports parmi ledit ensemble de ports avant d'envoyer chacune desdites parties de données élémentaires à son port de destination.

2. Passerelle selon la revendication 1, **caractérisée en ce que** lesdits moyens de stockage (13) sont destinés à stocker temporairement ledit ensemble de données élémentaires en provenance de ladite seconde entité (5), et **en ce que** lesdits moyens de contrôle (15) sont destinés à transformer ledit ensemble de données élémentaires stocké temporairement en des paquets de données alimentant ladite première entité (3).

3. Passerelle selon la revendication 1, **caractérisée en ce que** lesdits moyens de contrôle (15) sont destinés à gérer l'information décodée par la première entité (3) d'un paquet de données spécifique pour générer un top de synchronisation.

4. Passerelle selon l'une quelconque des revendications 1 à 3, **caractérisée en ce qu'**elle est réalisée dans un composant programmable.

5. Passerelle selon l'une quelconque des revendications 1 à 3, **caractérisée en ce qu'**elle est réalisée dans un circuit intégré à application spécifique.

6. Passerelle selon l'une quelconque des revendications 1 à 5, **caractérisée en ce que** ledit ensemble de ports (9) comporte des entrées-sorties discrètes de sorte que ledit ensemble de données élémentaires comportent des données discrètes.

7. Passerelle selon l'une quelconque des revendications 1 à 6, **caractérisée en ce que** ledit ensemble de ports (9) comporte au moins un port série de sorte que ledit ensemble de données élémentaires comportent des données sérialisées.

8. Passerelle selon l'une quelconque des revendications 1 à7, **caractérisée en ce que** ledit au moins un port série est de type port série synchronisé SPI.

9. Passerelle selon l'une quelconque des revendications 1 à 8, **caractérisée en ce que** ledit élément d'interconnexion à commutation de paquet est de type Serial RapidIO™.

10. Calculateur aéronautique comprenant au moins une unité centrale (43) et des moyens d'acquisition (45) et comportant au moins une passerelle (1) selon l'une quelconque des revendications 1 à 9, **caractérisé en ce que** ladite passerelle est une interface entre ladite au moins unité centrale et lesdits moyens d'acquisition.
